(19) 

**Europäisches Patentamt**
**European Patent Office**
**Office européen des brevets**

(11)  **EP 4 654 291 A1**

(12)  **EUROPEAN PATENT APPLICATION**
published in accordance with Art. 153(4) EPC

(43) Date of publication:
26.11.2025  Bulletin 2025/48

(21) Application number: 24800233.9

(22) Date of filing: 02.05.2024

(51) International Patent Classification (IPC):
$H01M\ 4/36^{(2006.01)}$      $H01M\ 4/525^{(2010.01)}$
$H01M\ 4/505^{(2010.01)}$    $H01M\ 4/131^{(2010.01)}$
$C01G\ 53/00^{(2025.01)}$    $H01M\ 10/052^{(2010.01)}$
$H01M\ 4/02^{(2006.01)}$

(52) Cooperative Patent Classification (CPC):
Y02E 60/10

(86) International application number:
PCT/KR2024/005937

(87) International publication number:
WO 2024/228552 (07.11.2024 Gazette 2024/45)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 02.05.2023 KR 20230057356

(71) Applicant: **LG Energy Solution, Ltd.**
**Seoul 07335 (KR)**

(72) Inventors:
- **JUNG, Hae Jung**
  **Daejeon 34122 (KR)**
- **PARK, Byung Chun**
  **Daejeon 34122 (KR)**
- **KIM, Ji Hye**
  **Daejeon 34122 (KR)**
- **HEO, Jong Wook**
  **Daejeon 34122 (KR)**
- **KIM, Yeong Jin**
  **Daejeon 34122 (KR)**
- **YU, Jun Woo**
  **Daejeon 34122 (KR)**
- **KIM, Young Seok**
  **Daejeon 34122 (KR)**
- **KOH, Yoon Young**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, POSITIVE ELECTRODE SLURRY COMPRISING SAME, MANUFACTURING METHOD THEREOF, AND POSITIVE ELECTRODE AND LITHIUM SECONDARY BATTERY COMPRISING SAME**

(57) A positive electrode active material according to the present invention includes a lithium nickel-based oxide containing nickel (Ni) and cobalt (Co) and having a molar ratio of the Ni to total transition metals of 80 mol% or more; and a cobalt-containing coating layer formed on a surface of the lithium nickel-based oxide, wherein the lithium nickel-based oxide is in a form of a single particle composed of one single nodule or a pseudo-single particle that is a composite of 30 or less nodules, the cobalt-containing coating layer is included in an amount of 2.0 mol% or more based on 100 moles of the lithium nickel-based oxide, and the positive electrode active material has a $D_{50}$ of 3.7 μm to 6.0 μm, a residual LiOH content of 0.20 wt% or less, and a Co/Ni ratio at a depth of 45 nm from a surface thereof of 0.15 to 0.40.

FIG.1

EP 4 654 291 A1

**Description**

**TECHNICAL FIELD**

Cross-reference to Related Applications

This application claims priority from Korean Patent Application No. 10-2023-0057356, filed on May 2, 2023, the disclosure of which is incorporated by reference herein.

Technical Field

The present invention relates to a positive electrode active material, a positive electrode slurry including the same, a method of preparing the same, and a positive electrode and a lithium secondary battery which include the same.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and among them, research and development on a lithium nickel-based oxide, which may easily achieve a large-capacity battery, is being more actively studied. However, the lithium nickel-based oxide in a form of a secondary particle had a problem in that crack formation in the positive electrode active material is intensified during charge and discharge.

In order to solve the above-described problem, a technique of preparing a positive electrode active material in a form of a single particle rather than a secondary particle by increasing sintering temperature during preparation of the lithium nickel-based oxide has been proposed.

However, the positive electrode active material in the form of a single particle has a problem in that an interface between the particles, which becomes a movement path of lithium ions, is less, and output is reduced and resistance is increased due to a long lithium diffusion path inside the particle. Thus, conventionally, the increase in resistance and the reduction in output of the positive electrode active material in the form of a single particle were minimized by forming the particles to have an average particle diameter of around 4.0 $\mu$m.

However, in order to make the average particle diameter of the positive electrode active material in the form of a single particle to be around 4.0 $\mu$m, a process of high strength grinding must be performed, wherein a large amount of fine powder was generated during this process, and, as a result, there was a problem in that phase stability was rapidly reduced due to an increase in viscosity of a slurry.

Therefore, there is a need for a technique to secure stable electrode production and yield by improving the phase stability of the slurry.

**DISCLOSURE OF THE INVENTION**

**TECHNICAL PROBLEM**

An aspect of the present invention provides a positive electrode active material, in which phase stability of a slurry is improved by adjusting a particle size distribution, a residual LiOH content, and an amount of a cobalt-containing coating layer of the positive electrode active material to a specific range, a positive electrode slurry including the same, and a method of preparing the same.

Another aspect of the present invention provides a positive electrode and a lithium secondary battery in which electrochemical properties are excellent by adjusting $D_{50}$ of the positive electrode active material to a specific range.

**TECHNICAL SOLUTION**

In an aspect, the present invention provides a positive electrode active material including a lithium nickel-based oxide containing nickel (Ni) and cobalt (Co) and having a molar ratio of the Ni to total transition metals of 80 mol% or more; and a cobalt-containing coating layer formed on a surface of the lithium nickel-based oxide, wherein the lithium nickel-based oxide is in a form of a single particle composed of one single nodule or a pseudo-single particle that is a composite of 30 or less nodules, the cobalt-containing coating layer is included in an amount of 2.0 mol% or more based on 100 moles of the lithium nickel-based oxide, and the positive electrode active material has a $D_{50}$ of 3.7 $\mu$m to 6.0 $\mu$m, a residual LiOH content of 0.20 wt% or less, and a Co/Ni ratio at a depth of 45 nm from a surface of the positive electrode active material of 0.15 to 0.40.

The lithium nickel-based oxide may have the molar ratio of the Ni to the total transition metals of 93 mol% or more.

The positive electrode active material may have a residual lithium content of 0.60 wt% or less.

The positive electrode active material may have a residual $Li_2CO_3$ content of 0.40 wt% or less.

The positive electrode active material may have a $D_{min}$ of 1.0 $\mu$m or more.

The lithium nickel-based oxide may be represented by Formula 1.

$$[\text{Formula 1}] \qquad Li_aNi_bCo_cM^1_dM^2_eO_2$$

In Formula 1, $M^1$ is at least one selected from the group consisting of manganese (Mn) and aluminum (Al), $M^2$ is at least one selected from the group consisting of barium (Ba), calcium (Ca), zirconium (Zr), titanium (Ti), magnesium (Mg), tantalum (Ta), niobium (Nb), and molybdenum (Mo), and $1.0 \leq a \leq 1.5$, $0.8 \leq b \leq 1.0$, $0 \leq c \leq 0.2$, $0 \leq d \leq 0.2$, and $0 \leq e \leq 0.1$.

In another aspect, the present invention provides a positive electrode slurry including a binder and the above-described positive electrode active material.

An adsorption amount of the binder to the positive electrode active material may be 25.0 mg/m$^2$ or less.

A viscosity change rate calculated by Equation 1 at 25°C may be 1,000% or less.

$$[\text{Equation 1}]$$

$$\text{Viscosity change rate (\%)} = \frac{(\text{viscosity after being left standing for 2 days}) - (\text{initial viscosity})}{\text{initial viscosity}} \times 100$$

In another aspect, the present invention provides a method of preparing a positive electrode active material which includes: forming a lithium nickel-based oxide by mixing a lithium nickel-based transition metal hydroxide precursor containing nickel (Ni) and cobalt (Co) with a lithium raw material and performing primary sintering; and forming a positive electrode active material including a cobalt-containing coating layer by mixing the lithium nickel-based oxide with a cobalt-containing raw material and performing secondary sintering, wherein the positive electrode active material includes a lithium nickel-based oxide having a molar ratio of the Ni to total transition metals of 80 mol% or more, and a cobalt-containing coating layer formed on a surface of the lithium nickel-based oxide, wherein the lithium nickel-based oxide is in a form of a single particle composed of one single nodule or a pseudo-single particle that is a composite of 30 or less nodules, the positive electrode active material has a $D_{50}$ of 3.7 $\mu$m to 6.0 $\mu$m and a residual LiOH content of 0.20 wt% or less, the cobalt-containing coating layer is included in an amount of 2.0 mol% or more based on 100 moles of the lithium nickel-based oxide, and the secondary sintering is performed at 600°C to 700°C.

The cobalt-containing raw material may include at least one selected from the group consisting of $Co(OH)_2$, CoOOH, $Co(OCOCH_3)_2 \cdot 4H_2O$, $Co(NO_3)_2 \cdot 6H_2O$, $CoSO_4$, and $Co(SO_4)_2 \cdot 7H_2O$.

The primary sintering may be performed at 750°C to 880°C.

In another aspect, the present invention provides a positive electrode including the above-described positive electrode active material.

In another aspect, the present invention provides a lithium secondary battery including the above-described positive electrode.

## ADVANTAGEOUS EFFECTS

Since a positive electrode active material according to the present invention suppresses an increase in viscosity of a slurry and reduces an adsorption amount of a binder by including a cobalt-containing coating layer on a surface of a lithium nickel-based oxide and adjusting a particle size, a residual LiOH content, and an amount of the cobalt-containing coating layer to a specific range, it may improve phase stability of the slurry to achieve excellent processability.

The positive electrode active material according to the present invention may achieve high initial efficiency, low initial resistance, and excellent high-temperature life characteristics by adjusting $D_{50}$ to a specific range to have low charge transfer resistance and diffusion resistance.

## BRIEF DESCRIPTION OF THE DRAWINGS

FIG. 1 is an SEM (Scanning Electron Microscope) image of positive electrode active material powder prepared by Example 1 of the present invention.

FIG. 2 is an SEM (Scanning Electron Microscope) image of positive electrode active material powder prepared by Example 2 of the present invention.

FIG. 3 is an SEM (Scanning Electron Microscope) image of positive electrode active material powder prepared by Example 3 of the present invention.

FIG. 4 is an SEM (Scanning Electron Microscope) image of positive electrode active material powder prepared by Comparative Example 1 of the present invention.

FIG. 5 is an SEM (Scanning Electron Microscope) image of positive electrode active material powder prepared by Comparative Example 2 of the present invention.

FIG. 6 is an SEM (Scanning Electron Microscope) image of positive electrode active material powder prepared by Comparative Example 3 of the present invention.

FIG. 7 is an SEM (Scanning Electron Microscope) image of positive electrode active material powder prepared by Comparative Example 4 of the present invention.

FIG. 8 is a graph illustrating X-ray photoelectron spectroscopy (XPS) depth profiles of cobalt-containing coating layers included in the positive electrode active materials prepared in Examples 1 to 3 and Comparative Examples 1 to 4.

## MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In the present specification, the expression "%" denotes wt% unless explicitly stated otherwise.

In this specification, the expression "particle" may include any one or all of a single particle, a pseudo-single particle, a primary particle, a nodule, and a secondary particle.

In this specification, the expression "single particle" means a particle composed of one nodule. In the present invention, the expression "pseudo-single particle" means a composite particle formed of 30 or less nodules.

In this specification, the expression "nodule" means a particle unit body constituting the single particle and the pseudo-single particle, wherein the nodule may be a single crystal without a crystalline grain boundary, or may be a polycrystal in which grain boundaries do not exist in appearance when observed by using a scanning electron microscope (SEM) with a field of view of 5,000 times to 20,000 times. An average particle diameter of the nodule may be measured as an arithmetic average of particle diameters of nodules which are measured using a scanning electron microscope

(SEM).

In this specification, the expression "secondary particle" means a particle formed by aggregation of a plurality, for example, tens to hundreds of primary particles. Specifically, the secondary particle is an aggregate of 40 or more primary particles.

In this specification, the expression "$D_{50}$" is an average particle diameter, wherein it means a particle diameter at a point where a particle volume according to the particle diameter is 50% in a particle size distribution of a positive electrode active material. The average particle diameter ($D_{50}$) may be measured using a commercially available laser PSD (Particle Size Distribution) measurement instrument. For example, after dispersing positive electrode active material powder in a dispersion medium, the dispersion medium was introduced into the commercially available laser PSD (Particle Size Distribution) measurement instrument (e.g., Microtrac S3500), a particle size distribution was calculated by measuring a difference in diffraction patterns due to a particle size when particles passed through a laser beam.

In this specification, a concentration gradient composition and a concentration of transition metal in the positive electrode active material particle may be confirmed using a method such as X-ray photoelectron spectroscopy (XPS), an Electron Probe Micro Analyzer (EPMA), an Inductively Coupled Plasma-Atomic Emission Spectrometer (ICP-AES), or Time of Flight Secondary Ion Mass Spectrometry (ToF-SIMS), and, specifically, the positive electrode active material particle is etched with argon (Ar) gas for 3,000 seconds, and an atomic ratio of each metal may be measured using X-ray photoelectron spectroscopy (XPS) while etching from a surface of the positive electrode active material to the center thereof.

Hereinafter, the present invention will be described in more detail.

**Positive Electrode Active Material**

A positive electrode active material according to the present invention is characterized in that it includes a lithium nickel-based oxide containing nickel (Ni) and cobalt (Co) and having a molar ratio of the Ni to total transition metals of 80 mol% or more; and a cobalt-containing coating layer formed on a surface of the lithium nickel-based oxide, wherein the lithium nickel-based oxide is in a form of a single particle composed of one single nodule or a pseudo-single particle that is a composite of 30 or less nodules, the cobalt-containing coating layer is included in an amount of 2.0 mol% or more based on 100 moles of the lithium nickel-based oxide, and the positive electrode active material has a $D_{50}$ of 3.7 $\mu$m to 6.0 $\mu$m, a residual LiOH content of 0.20 wt% or less, and a Co/Ni ratio at a depth of 45 nm from a surface thereof of 0.15 to 0.40.

Research and development on a lithium nickel-based oxide is being more actively studied. However, the lithium nickel-based oxide in a form of a secondary particle had a problem in that crack formation in the positive electrode active material is intensified during charge and discharge. In order to solve the above-described problem, a technique of preparing a positive electrode active material in a form of a single particle rather than a secondary particle by increasing sintering temperature during preparation of the lithium nickel-based oxide has been proposed.

However, the positive electrode active material in the form of a single particle has a problem in that an interface between the particles, which becomes a movement path of lithium ions, is less, and output is reduced and resistance is increased due to a long lithium diffusion path inside the particle. Thus, conventionally, the increase in resistance and the reduction in output of the positive electrode active material in the form of a single particle were minimized by forming the particles to have an average particle diameter of around 4.0 $\mu$m.

However, in order to make the average particle diameter of the positive electrode active material in the form of a single particle to be around 4.0 $\mu$m, a process of high strength grinding must be performed, wherein a large amount of fine powder was generated during this process, and, as a result, there was a problem in that phase stability was rapidly reduced due to an increase in viscosity of a slurry.

The positive electrode active material according to the present invention includes a lithium nickel-based oxide containing nickel (Ni) and cobalt (Co) and having a molar ratio of the Ni to total transition metals of 80 mol% or more, preferably 90 mol% or more, and more preferably 93 mol% or more. In a case in which the molar ratio of the Ni satisfies the above range, excellent capacity characteristics may be achieved.

However, a Ni-based positive electrode active material including a high concentration of Ni has high capacity due to a higher amount of the nickel among transition metals constituting the positive electrode active material than other transition metals, but there is a limitation in that it has structural instability due to unstable $Ni^{3+}$ and $Ni^{4+}$ ions present on a surface of the positive electrode active material. In order to solve this structural instability, various techniques for modifying the surface of the positive electrode active material are being studied.

In relation to the foregoing, inventors of the present invention have found that in a case in which, while introducing a cobalt-containing coating layer on a surface of a Ni-based positive electrode active material containing a high concentration of Ni to improve surface stability, the cobalt-containing coating layer was included in an amount of 2.0 mol% or more based on 100 moles of lithium nickel-based oxide and the positive electrode active material having a $D_{50}$ of 3.7 $\mu$m to 6.0 $\mu$m, a residual LiOH content of 0.20 wt% or less, and a Co/Ni ratio at a depth of 45 nm from the surface of 0.15 to 0.40 was used, phase stability of a slurry was improved by reducing a rate of change in viscosity of the slurry and reducing an adsorption amount of a binder at the same time.

The lithium nickel-based oxide is in the form of a single particle composed of one single nodule or a pseudo-single particle that is a composite of 30 or less nodules, preferably 2 to 20 nodules, and more preferably 2 to 10 nodules. Since the lithium nickel-based oxide in the form of a single particle and/or a pseudo-single particle has higher particle strength than a conventional lithium nickel-based oxide in a form of a secondary particle in which tens to hundreds of primary particles are aggregated, particle cracking during rolling is reduced.

Also, with respect to the lithium nickel-based oxide in the form of a single particle or a pseudo-single particle according to the present invention, since the number of subcomponents (i.e., nodules) constituting the particle is small, changes due to volume expansion and contraction of primary particles during charge and discharge are small, and accordingly, occurrence of cracks in the particle is significantly reduced.

The positive electrode active material may have a $D_{50}$ of 3.7 μm to 6.0 μm, preferably 3.7 μm to 5.7 μm, and more preferably 3.7 μm to 5.0 μm. In a case in which the $D_{50}$ is less than 3.7 μm, viscosity of a slurry may be excessively increased due to a large amount of fine powder during preparation of the slurry, and in a case in which the $D_{50}$ is greater than 6.0 μm, since lithium mobility in the positive electrode active material is decreased, initial resistance of a lithium secondary battery including the positive electrode active material may be increased.

Residual lithium of the positive electrode active material according to the present invention may be at least one selected from the group consisting of LiOH and $Li_2CO_3$.

The residual LiOH content may be in a range of 0.20 wt% or less, preferably 0.01 wt% to 0.20 wt%, and more preferably 0.05 wt% to 0.15 wt%. In general, since a Ni-based positive electrode active material containing a high concentration of Ni uses LiOH, as a lithium raw material, in a precursor in order to obtain high capacity, a proportion of the LiOH remaining on the surface of the positive electrode active material is increased, and thus, there is a problem in that suppression of resistance increase or capacity reduction is difficult. Accordingly, it is necessary to control the residual LiOH content, wherein, in a case in which the residual LiOH content is greater than the above numerical range, when the residual LiOH is dissolved in a solvent (NMP) during an electrode preparation process, the solvent is basicized, and since the basicized solvent is mixed with a binder (PVdF) to gelate the slurry, it may be difficult to prepare an electrode.

The positive electrode active material may have a residual lithium content of 0.60 wt% or less, preferably 0.01 wt% to 0.60 wt%, and more preferably 0.05 wt% to 0.50 wt%. A residual $Li_2CO_3$ content may be in a range of 0.40 wt% or less, preferably 0.10 wt% to 0.35 wt%, and more preferably 0.20 wt% to 0.30 wt%. In a case in which the residual lithium or residual $Li_2CO_3$ content is greater than the above numerical range, the positive electrode active material may react with an electrolyte solution after it is used in a battery to cause a side effect such as swelling and gas generation, and, as a result, expansion and ignition of the battery may be caused. Also, since the residual lithium acts as a raw material for forming a coating layer in a process of forming a coating layer which will be described later, a thick coating layer is formed when an excessive amount of the residual lithium is present on the surface of the lithium nickel-based oxide, and, as a result, there is a problem in that resistance characteristics are increased.

The cobalt-containing coating layer may be included in an amount of 2.0 mol% or more based on 100 moles of the lithium nickel-based oxide. Preferably, the cobalt-containing coating layer may be included in an amount of 2.0 mol% to 5.5 mol%, more preferably, 2.0 mol% to 3.5 mol% based on 100 moles of the lithium nickel-based oxide. In a case in which the amount of the cobalt-containing coating layer according to the present invention is greater than the above amount range, since an excessively thick coating layer may be formed, it may rather result in increasing the initial resistance. In contrast, in a case in which the amount of the cobalt-containing coating layer is less than the above amount range, there is a problem in that the limitation of the structural instability is not resolved due to the unstable $Ni^{3+}$ and $Ni^{4+}$ ions present on the surface of the positive electrode active material.

Also, the cobalt-containing coating layer may have a Co/Ni ratio at a depth of 45 nm from a surface thereof of 0.15 to 0.40, preferably 0.16 to 0.30, and more preferably 0.17 to 0.25. In a case in which the Co/Ni ratio at a depth of 45 nm as well as the $D_{50}$ and residual LiOH content of the positive electrode active material in the present invention satisfies the above range, since the phase stability of the slurry is improved by suppressing the increase in viscosity of the slurry and reducing the adsorption amount of the binder, excellent processability may be achieved.

The positive electrode active material according to the present invention may have a $D_{min}$ of 1.0 μm or more, preferably 1.0 μm to 6.0 μm, and more preferably 1.0 μm to 5.0 μm. In a case in which the $D_{min}$, as the minimum particle diameter of the positive electrode active material, satisfies the above range, the viscosity may be excessively increased during the preparation of the slurry to reduce the processability.

The positive electrode active material according to the present invention may include a lithium nickel-based oxide, and may specifically include a lithium nickel-based oxide having a composition as in Formula 1 below.

[Formula 1]     $Li_aNi_bCo_cM^1_dM^2_eO_2$

In Formula 1, $M^1$ is at least one selected from the group consisting of manganese (Mn) and aluminum (Al), and is preferably Mn or a combination of Mn and Al, and $M^2$ is at least one selected from the group consisting of barium (Ba), calcium (Ca), zirconium (Zr), titanium (Ti), magnesium (Mg), tantalum (Ta), niobium (Nb), and molybdenum (Mo). The element $M^2$ is not necessarily included, but, in a case in which it is included in an appropriate amount, it may play a role in promoting grain growth during sintering or improving crystal structure stability.

a represents a molar ratio of lithium in the lithium nickel-based oxide, wherein a may satisfy $1.0 \le a \le 1.5$, $1.0 \le a \le 1.5$, or $1.0 \le a \le 1.2$. When the molar ratio of the lithium satisfies the above range, a stable layered crystal structure may be formed.

b represents a molar ratio of nickel among total metals excluding lithium in the lithium nickel-based oxide, wherein b may satisfy $0.8 \le b \le 1.0$, $0.85 \le b \le 1.0$, or $0.90 \le b \le 1.0$. In a case in which the molar ratio of the nickel satisfies the above range, capacity characteristics are excellent, and particularly, in a case in which the molar ratio of the nickel is 0.90 or more, even better capacity characteristics may be achieved.

c represents a molar ratio of cobalt among the total metals excluding lithium in the lithium nickel-based oxide, wherein c may satisfy $0 \leq c \leq 0.2$, $0 < c < 0.2$, $0 < c \leq 0.18$, or $0 < c < 0.18$.

d represents a molar ratio of $M^1$ among the total metals excluding lithium in the lithium nickel-based oxide, wherein d may satisfy $0 \leq d \leq 0.2$, $0 < d < 0.2$, $0 < d \leq 0.18$, or $0 < d < 0.18$.

e represents a molar ratio of element $M^2$ among the total metals excluding lithium in the lithium nickel-based oxide, wherein e may satisfy $0 \leq e \leq 0.1$, $0 < e < 0.1$, or $0 < e \leq 0.08$.

## Method of Preparing Positive Electrode Active Material

Next, a method of preparing a positive electrode active material of the present invention will be described.

When preparing the positive electrode active material having a molar ratio of the Ni to the total transition metals of 80 mol% or more, a degree of completeness of a surface structure of the positive electrode active material may be low due to high sintering temperature, and a concentration of the residual lithium may be high. Also, in a case in which the particle diameter of the positive electrode active material is large, there is a problem in that the positive electrode active material may have high initial resistance. Thus, there is a need for a technique which may improve the degree of completeness of the surface structure through a coating layer formed on the surface of the lithium nickel-based oxide particle, may reduce the concentration of the residual lithium, and may decrease the initial resistance through optimization of coating conditions.

The method of preparing a positive electrode active material according to the present invention includes steps of forming a lithium nickel-based oxide by mixing a lithium nickel-based transition metal hydroxide precursor containing nickel (Ni) and cobalt (Co) with a lithium raw material and performing primary sintering, and forming a positive electrode active material including a cobalt-containing coating layer by mixing the lithium nickel-based oxide with a cobalt-containing raw material and performing secondary sintering.

The lithium nickel-based transition metal oxide has a molar ratio of the Ni to the total transition metals of 80 mol% or more and is a single particle composed of one single nodule or a pseudo-single particle that is a composite of 30 or less nodules. Also, the positive electrode active material has a $D_{30}$ of 3.7 $\mu$m to 6.0 $\mu$m and a residual LiOH content of 0.20 wt% or less, the cobalt-containing coating layer is included in an amount of 2.0 mol% or more based on 100 moles of the lithium nickel-based oxide, and the secondary sintering is performed at 600°C to 700°C. Since the content described above applies equally, overlapping descriptions will be omitted.

Next, each step of the method of preparing a positive electrode active material will be described in detail.

## (1) Forming Lithium Nickel-based Oxide

First, a lithium nickel-based oxide is formed by mixing a lithium nickel-based transition metal hydroxide precursor containing nickel (Ni) and cobalt (Co) with a lithium raw material and performing primary sintering.

In this case, a commercially available precursor, such as nickel-cobalt-manganese-based hydroxide, may be purchased and used as the lithium nickel-based transition metal hydroxide precursor, that is, a positive electrode active material precursor, or the lithium nickel-based transition metal hydroxide precursor may be prepared according to a method of preparing a precursor which is known in the art, for example, a co-precipitation method.

For example, after preparing a transition metal-containing solution containing cations of nickel (Ni), cobalt (Co), and $M^1$, a positive electrode active material precursor may be prepared by a co-precipitation reaction while adding an ammonium cation-containing complexing agent and a basic aqueous solution to the transition metal-containing solution.

The transition metal-containing solution may include a nickel-containing raw material, a cobalt-containing raw material, and an $M^1$-containing raw material, and the $M^1$-containing raw material may be a manganese-containing raw material and/or an aluminum-containing raw material.

The nickel-containing raw material, for example, may be nickel-containing acetic acid salts, nitrates, sulfates, halides, sulfides, hydroxides, oxides, or oxyhydroxides, and may specifically be $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, nickel halide, or a combination thereof, but is not limited thereto.

The cobalt-containing raw material, for example, may be cobalt-containing acetic acid salts, nitrates, sulfates, halides, sulfides, hydroxides, oxides, or oxyhydroxides, and may specifically be $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but is not limited thereto.

The manganese-containing raw material, for example, may be manganese-containing acetic acid salts, nitrates, sulfates, halides, sulfides, hydroxides, oxides, oxyhydroxides, or a combination thereof, and may specifically be manganese oxides such as $Mn_2O_3$, $MnO_2$, and $Mn_3O_4$; manganese salts such as $MnCO_3$, $Mn(NO_3)_2$, $MnSO_4$, manganese acetate, dicarboxylic acid manganese salt, manganese citrate, and fatty acid manganese salt; manganese oxyhydroxide, manganese chloride, or a combination thereof, but is not limited thereto.

The aluminum-containing raw material, for example, may be $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halide, or a combination thereof.

The transition metal-containing solution may be prepared by adding the nickel-containing raw material, the cobalt-containing raw material, and the $M^1$-containing raw materials into a solvent, specifically, water, or a mixed solvent of water and an organic solvent (e.g., alcohol, etc.), which may be uniformly mixed with the water, or may be prepared by mixing an aqueous solution of the nickel-containing raw material, an aqueous solution of the cobalt-containing raw material, and the $M^1$-containing raw material.

The ammonium cation-containing complexing agent, for example, may be $NH_4OH$, $(NH_4)_2SO_4$, $NH_4NO_3$, $NH_4Cl$, $CH_3COONH_4$, $NH_4CO_3$, or a combination thereof, but is not limited thereto. The ammonium cation-containing complexing agent may also be used in the form of an aqueous solution, and, in this case, water or a mixture of water and an organic solvent (specifically, alcohol etc.), which may be uniformly mixed with the water, may be used as a solvent.

The basic compound may be a hydroxide of an alkali metal or alkaline earth metal, such as NaOH, KOH, or $Ca(OH)_2$, a hydrate thereof, or a combination thereof. The basic compound may also be used in the form of an aqueous solution, and, in this case, water or a mixture of water and an organic solvent (specifically, alcohol etc.), which may be uniformly mixed with the water, may be used as a solvent.

The basic compound is added to adjust a pH of a reaction solution, wherein it may be added in an amount such that a pH of the metal solution is in a range of 8 to 12.

The co-precipitation reaction may be performed in a temperature range of 35°C to 80°C in an inert atmosphere such as nitrogen or argon.

Through the above-described process, positive electrode active material precursor particles of nickel-cobalt-$M^1$ hydroxide are generated and precipitated in the reaction solution. A positive electrode active material precursor having a nickel (Ni) content of 80 mol% or more of a total metal content may be prepared by controlling concentrations of the nickel-containing raw material, the cobalt-containing raw material, and the $M^1$-containing raw material. The precipitated positive electrode active material precursor particles may be separated according to a conventional method and dried to prepare a positive electrode active material precursor.

Thereafter, the lithium nickel-based transition metal hydroxide precursor and a lithium raw material may be mixed.

As the lithium raw material, lithium-containing sulfates, nitrates, acetic acid salts, carbonates, oxalates, citrates, halides, hydroxides, or oxyhydroxides may be used, and the lithium raw material is not particularly limited as long as it is soluble in water. Specifically, the lithium raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, or $Li_3C_6H_5O_7$, and any one thereof or a mixture of two or more thereof may be used.

The positive electrode active material precursor and the lithium raw material, for example, may be mixed in a molar ratio of about 1:1, about 1:1.05, about 1:1.10, about 1:1.15, or about 1:1.20, but the present invention is not limited thereto.

Thereafter, the mixture may be subjected to primary sintering. The primary sintering may be performed in an air or oxygen atmosphere. The primary sintering may be performed at a temperature of 750°C to 880°C, 780°C to 880°C, 800°C to 870°C, or 820°C to 870°C. The primary sintering may be performed for 5 hours to 20 hours, 6 hours to 12 hours, or 8 hours to 10 hours.

**(2) Mixing the Lithium Nickel-based Oxide with Cobalt-containing Raw Material**

Next, a positive electrode active material including a cobalt-containing coating layer is formed by mixing the lithium nickel-based oxide with a cobalt-containing raw material and performing secondary sintering.

For example, the surface of the lithium nickel-based oxide is coated with a cobalt-containing raw material. The cobalt-containing raw material may be at least one of $Co(OH)_2$, $CoOOH$, $Co(OCOCH_3)_2 \cdot 4H_2O$, $Co(NO_3)_2 \cdot 6H_2O$, $CoSO_4$, and $Co(SO_4)_2 \cdot 7H_2O$. Specifically, a positive electrode active material including the cobalt-containing coating layer may be formed by adding $Co(OH)_2$ to the lithium nickel-based oxide.

Since a larger amount of unstable Ni ions present on the surface of the positive electrode active material may be stabilized by forming the cobalt-containing coating layer on the surface of the lithium nickel-based oxide as described above, stability of the positive electrode active material may be improved.

The secondary sintering may be performed at a temperature of 600°C to 700°C, preferably 630°C to 690°C, and more preferably 640°C to 690°C.

In a case in which the secondary sintering temperature is greater than 700°C, since a phenomenon occurs in which cobalt diffuses into the positive electrode active material, a change in crystal structure of the positive electrode active material may be caused and the residual lithium content may be changed to adversely affect lifetime and resistance characteristics of the positive electrode active material. That is, it may be difficult to achieve desired residual lithium content and amount of the cobalt-containing coating layer.

In a case in which the secondary sintering temperature is less than 600°C, the cobalt-containing coating layer may be exfoliated from the positive electrode active material due to its weak binding force with the surface of the positive electrode active material, and an effect of improving high-temperature life characteristics may be insignificant because a coating layer with a low cobalt content is formed in comparison to a case where the secondary sintering is performed within the above temperature range.

The secondary sintering may be performed for 2 hours to 8 hours, preferably 3 hours to 7 hours, and more preferably 4 hours to 6 hours.

As a result of mixing the lithium nickel-based oxide with the cobalt-containing raw material and performing the secondary sintering in the above sintering temperature and sintering time range, a secondary battery having low initial resistance may be achieved by forming a desired amount of the cobalt-containing coating layer on the surface of the lithium nickel-based oxide.

A separate washing process may not be included between the primary sintering and the secondary sintering. Conventionally, a process of washing residual lithium present on the surface of the positive electrode active material was performed. The reason for this was that, when the residual lithium was present, there was a problem in that a side reaction with an electrolyte solution occurred when used in a battery and a gas generation amount was increased during high-temperature storage. In contrast, in the preparation method according to an embodiment of the present invention, since a separate washing process is not performed, the residual lithium is present on the particle surface and this residual lithium reacts with cobalt to form a coated form of $LiCoO_2$ phase on the particle surface, and thus, excellent high-temperature life characteristics may be achieved.

**Positive Electrode Slurry**

Next, a positive electrode slurry according to the present invention will be described.

The positive electrode slurry according to the present invention is characterized in that it includes the positive electrode active material according to the present invention and a binder.

Specifically, the positive electrode slurry according to the present invention may optionally include a conductive agent, if necessary. Specifically, the positive electrode slurry may be prepared by mixing the positive electrode active material, the binder, and/or the conductive agent in a solvent.

An adsorption amount of the binder to the positive electrode active material according to the present invention may be in a range of 25.0 mg/m$^2$ or less, preferably 10.0 mg/m$^2$ to 25.0 mg/m$^2$, and more preferably 15.0 mg/m$^2$ to 23.0 mg/m$^2$. In a case in which the adsorption amount of the binder to the positive electrode active material satisfies the above range, the viscosity of the slurry may be reduced and the phase stability of the slurry may be improved.

A viscosity change rate calculated by Equation 1 below at 25°C of the positive electrode slurry according to the present invention may be in a range of 1,000% or less, preferably 800% or less, and more preferably 10% to 600%. In a case in which the viscosity change rate satisfies the above range, the phase stability of the slurry may be improved, and stable electrode production and yield improvement may be possible when the slurry is used in the battery.

[Equation 1]

$$\text{Viscosity change rate (\%)} = \frac{(\text{viscosity after being left standing for 2 days}) - (\text{initial viscosity})}{\text{initial viscosity}} \times 100$$

The binder improves adhesion between positive electrode active material particles and adhesion between the positive electrode active material and a current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on a total solid content of the positive electrode slurry.

The conductive agent is used to provide conductivity to an electrode, wherein any conductive agent may be used without particular limitation as long as it has suitable electron conductivity without causing adverse chemical changes in the battery. Specific examples of the conductive agent may be graphite such as natural graphite or artificial graphite;

carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, 0.1 wt% to 9 wt%, or 0.1 wt% to 5 wt% based on the total solid content of the positive electrode slurry.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of a positive electrode.

## Positive Electrode

A positive electrode according to the present invention includes the above-described positive electrode active material of the present invention. Specifically, the positive electrode includes a positive electrode collector and a positive electrode active material layer formed on the positive electrode collector, and the positive electrode active material layer includes a positive electrode slurry including the positive electrode active material according to the present invention. Since the positive electrode active material and the positive electrode slurry have been described above, detailed descriptions thereof will be omitted and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode may be prepared according to a typical method of preparing a positive electrode except that the above-described positive electrode active material is used. Specifically, the above-described positive electrode slurry is applied to the positive electrode collector, and the positive electrode may then be prepared by drying and rolling the coated positive electrode collector.

Also, as another method, the positive electrode may be prepared by casting the positive electrode slurry on a separate support and then laminating a film separated from the support on the positive electrode collector.

## Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt%, 82 wt% to 99 wt%, or 84 wt% to 99 wt% based on a total weight of the negative electrode active material layer.

The binder is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 1 wt% to 30 wt%, 1 wt% to 20 wt%, or 1 wt% to 10 wt% based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating a negative electrode slurry composition, which is prepared by dissolving or dispersing optionally the binder and the conductive agent as well as the negative electrode active material in a solvent, on the negative electrode collector and drying the coated negative electrode collector, or may be prepared by casting the negative electrode slurry composition on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

As described above, since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Examples and Comparative Examples

### Example 1 - Preparation of Positive Electrode Active Material

A $Ni_{0.93}Co_{0.05}Mn_{0.02}(OH)_2$ positive electrode active material precursor and a LiOH lithium raw material were put into a 700 L Henschel mixer such that a molar ratio of Li : transition metals (Ni+Co+Mn) was 1.05:1, and mixed at a center speed of 400 rpm for 20 minutes. The mixed powder was put into an alumina crucible having a size of 330 mm $\times$ 330 mm, and primarily sintered at 850°C for 12 hours in an oxygen atmosphere to prepare $LiNi_{0.93}Co_{0.05}Mn_{0.02}O_2$.

Thereafter, the primary sintered product was mixed with 12,000 ppm of $Co(OH)_2$ such that a molar ratio of the primary sintered product : Co was 100:2, and secondary sintering was then performed at 680°C for 5 hours to prepare positive electrode active material powder on which a cobalt-containing coating layer was formed.

### Example 2 - Preparation of Positive Electrode Active Material

Positive electrode active material powder was prepared in the same manner as in Example 1 except that the primary sintered product was mixed with 18,000 ppm of $Co(OH)_2$ such that a molar ratio of the primary sintered product : Co was 100:3, and secondary sintering was then performed at 680°C for 5 hours.

### Example 3 - Preparation of Positive Electrode Active Material

Positive electrode active material powder was prepared in the same manner as in Example 1 except that the secondary sintering was performed at 660°C for 5 hours.

**Example 4** - **Preparation of Positive Electrode Active Material**

Positive electrode active material powder was prepared in the same manner as in Example 1.

**Example 5** - **Preparation of Positive Electrode Active Material**

Positive electrode active material powder was prepared in the same manner as in Example 1.

**Comparative Example 1** - **Preparation of Positive Electrode Active Material**

Positive electrode active material powder was prepared in the same manner as in Example 1 except that the secondary sintering was performed at 720°C for 5 hours.

**Comparative Example 2** - **Preparation of Positive Electrode Active Material**

Positive electrode active material powder was prepared in the same manner as in Example 1 except that the secondary sintering was performed at 800°C for 5 hours.

**Comparative Example 3** - **Preparation of Positive Electrode Active Material**

Positive electrode active material powder was prepared in the same manner as in Example 1 except that the primary sintered product was mixed with 6,000 ppm of $Co(OH)_2$ such that a molar ratio of the primary sintered product : Co was 100:1, and secondary sintering was then performed at 680°C for 5 hours.

**Comparative Example 4** - **Preparation of Positive Electrode Active Material**

Positive electrode active material powder was prepared in the same manner as in Example 1 except that the primary sintering was performed at 850°C for 10 hours.

**Comparative Example 5** - **Preparation of Positive Electrode Active Material**

Positive electrode active material powder was prepared in the same manner as in Example 1 except that the positive electrode active material precursor and the LiOH lithium raw material were put into a Henschel mixer, mixed at a center speed of 400 rpm for 30 minutes, and then primarily sintered at 950°C for 12 hours in an oxygen atmosphere.

**Experimental Example 1** - **Particle Size Distribution of the Positive Electrode Active Material**

After dispersing 0.05 g of each of the positive electrode active materials prepared in Examples 1 to 5 and Comparative Examples 1 to 5 in a $H_2O$ dispersion medium, the dispersion medium was introduced into a commercially available laser PSD (Particle Size Distribution) measurement instrument (e.g., Microtrac S3500) and a particle size distribution was calculated by measuring a difference in diffraction patterns due to a particle size when particles passed through a laser beam.

$D_{50}$ means a particle diameter at a point where a particle volume according to the particle diameter is 50% in the particle size distribution of the positive electrode active material. The results thereof are presented in Tables 1 and 2 below.

**Experimental Example 2** - **Surface Observation of the Positive Electrode Active Material**

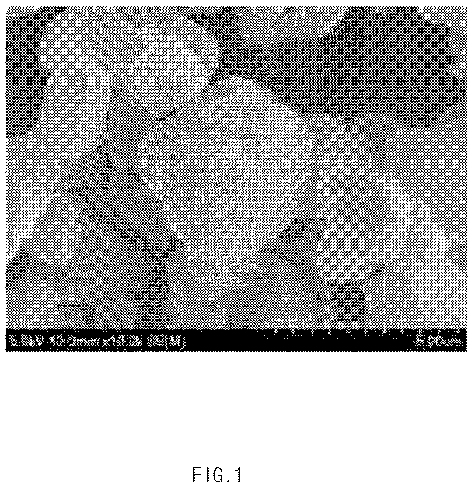

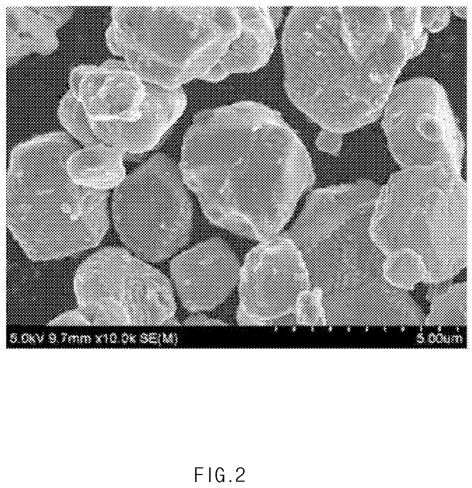

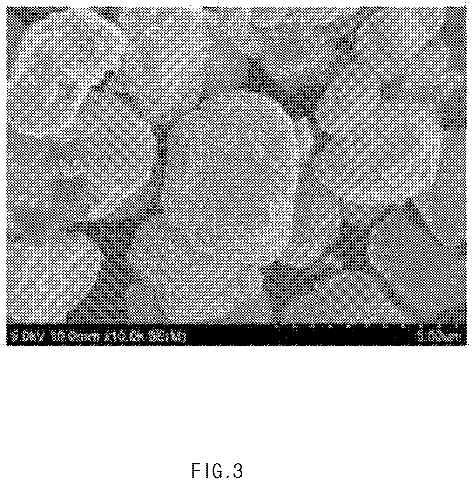

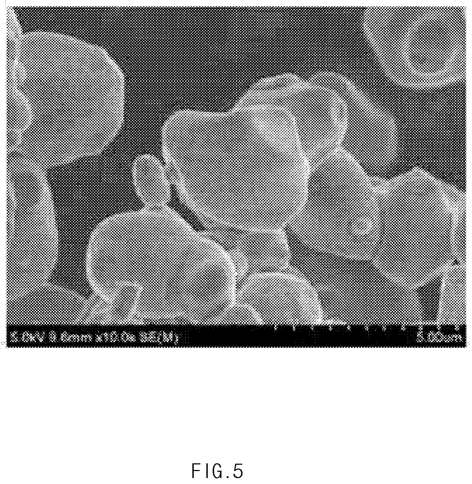

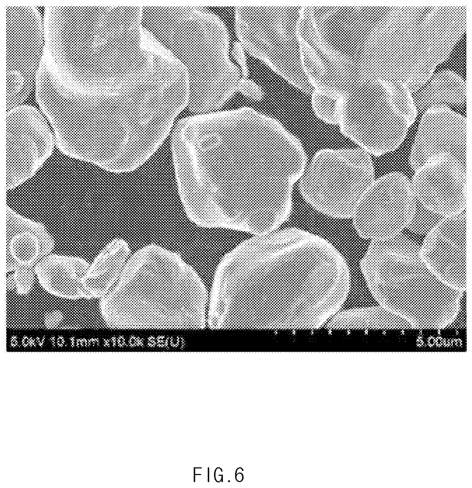

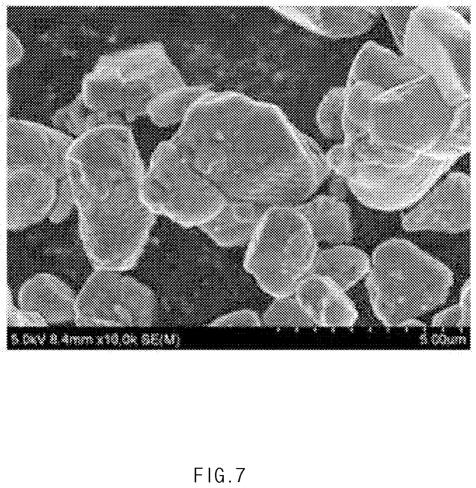

A scanning electron microscope (SEM) image of each of the positive electrode active material particles prepared in Examples 1 to 3 and Comparative Examples 1 to 4 was obtained by using a scanning electron microscope. These SEM images are illustrated in FIGS. 1 to 7.

According to FIGS. 1 to 3, with respect to the positive electrode active materials prepared in Examples 1 to 3, it may be confirmed that a cobalt-containing coating layer in the form of a layer or island was formed on a surface of the lithium nickel-based oxide.

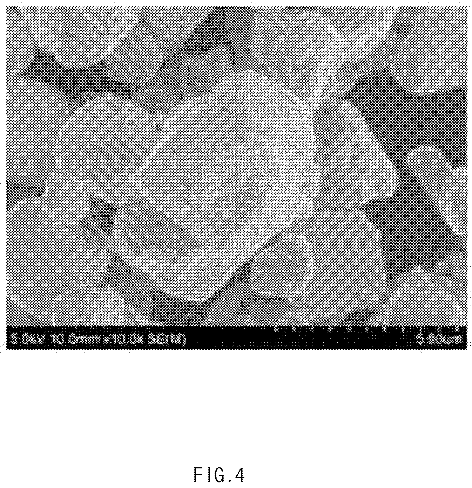

In contrast, according to FIGS. 4 to 7, with respect to the positive electrode active materials prepared in Comparative Examples 1 and 2, since cobalt diffused into the particles due to the high secondary sintering temperature, almost no cobalt-containing coating layer was formed on a surface of the lithium nickel-based oxide, and thus, it may be confirmed that the surface was smooth. With respect to the positive electrode active material prepared in Comparative Example 3, since an amount of the cobalt-containing raw material was small, it may be confirmed that almost no cobalt-containing coating layer was formed. Since the positive electrode active material prepared in Comparative Example 4 differed only in that the primary sintering time was reduced in comparison to those of Examples 1 to 3, it may be confirmed that a cobalt-containing coating layer was formed on a surface of the lithium nickel-based oxide.

**Experimental Example 3** - **XPS Analysis of the Positive Electrode Active Material**

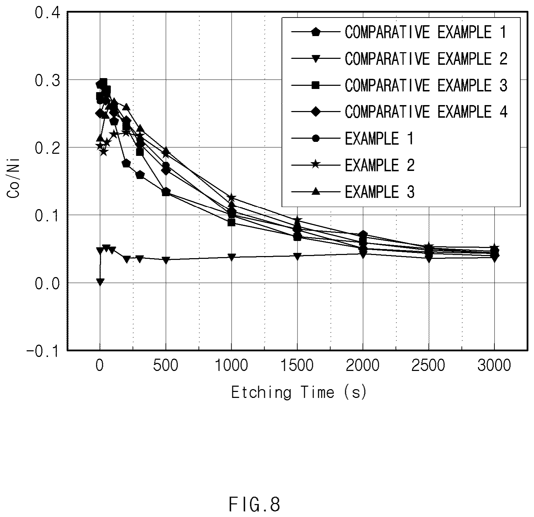

A Co/Ni ratio according to etching time was measured while etching the cobalt-containing coating layer, which was included in the positive electrode active materials prepared in Examples 1 to 3 and Comparative Examples 1 to 4, from a surface to the center through depth profiles using X-ray photoelectron spectroscopy (XPS) (Thermo Fisher Scientific Inc., Nexsa2 ESCA system). Measurement results are illustrated in FIG. 8.

Specifically, the positive electrode active material particles prepared in Examples 1 to 3 and Comparative Examples 1 to 4 were introduced into a vacuum chamber and then measured under the following conditions.

- X-ray source: Monochromated Al K$\alpha$ (1486.6 eV)
- X-ray spot size: 400 $\mu$m
- Sputtering: monatomic Ar (energy: 1000 eV, raster width: 2 mm)
- Etching rate: 0.09 nm/s based on $Ta_2O_5$
- Operation mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun 2V, 250 $\mu$A

**Experimental Example 4** - **Measurement of Residual Lithium Content of the Positive Electrode Active Material**

A residual lithium content of each of the positive electrode active materials prepared in Examples 1 to 3 and Comparative Examples 1 to 4 was measured. Measurement results are presented in Table 1 below.

The residual lithium content present on the surface of the positive electrode active material was measured by pH titration, and T5 by Mettler Toledo was used as a pH meter. Specifically, 10 g of each of the positive electrode active material powders prepared in Examples 1 to 3 and Comparative Examples 1 to 4 was stirred in 100 mL of distilled water for 5 minutes, and pH titration was then performed while adding a 0.1 N HCl solution to the solution.

**Experimental Example 5** - **Measurement of Adsorption Amount of the Binder**

**<Preparation of Slurry for Measuring Adsorption Amount>**

Each of the positive electrode active materials prepared in Examples 1 to 3 and Comparative Examples 1 to 4 and a PVdF binder (KF9700) were mixed at a weight ratio of 98.11:1.89 to prepare a slurry for measuring an adsorption amount in which a solid content was 76.2 wt%. Specifically, the slurry for measuring an adsorption amount was prepared by mixing at a speed of 2,500 rpm for 6 hours at 45°C under dry room conditions.

The slurry for measuring an adsorption amount was centrifuged to measure a solid content of a supernatant liquid. An adsorption amount of the binder was calculated from a viscosity master curve for each solid content of the binder/slurry using a rheometer by TA Instruments. Calculation results are presented in Table 1 below.

As shown in Table 1, an adsorption amount of the binder to each of the positive electrode active materials prepared in Examples 1 to 3 was equivalent to that to the positive electrode active material prepared in Comparative Example 3, but it may be confirmed that it was lower than those to the positive electrode active materials prepared in Comparative Examples 1, 2, and 4.

**Experimental Example 6** - **Measurement of Viscosity of Positive Electrode Slurry**

**<Preparation of Positive Electrode Slurry>**

Each of the positive electrode active materials prepared in Examples 1 to 3 and Comparative Examples 1 to 3, PVdF (polyvinylidene fluoride) (KF9700, Solef5130) as a binder, a nitrile butadiene rubber (H-NBR) (HPD01) as a dispersant, and carbon black (B.CNT, SFG6L) and single-walled carbon nanotubes, as a conductive agent, were mixed at a weight ratio of 97.02:1.87:0.002:0.18:0.60:0.30:0.01 to prepare a positive electrode slurry with a solid content of 67 wt%.

Specifically, the slurry for measuring viscosity was prepared by mixing at a speed of 2,500 rpm for 75 minutes at 45°C under dry room conditions.

Viscosity of each positive electrode slurry was measured using a viscosity measurement device (Rheometers by TA Instruments). Measurement results are presented in Table 1 below.

[Table 1]

| | | Example 1 | Example 2 | Example 3 | Comparative Example 1 | Comparative Example 2 | Comparative Example 3 | Comparative Example 4 |
|---|---|---|---|---|---|---|---|---|
| $D_{50}$ ($\mu$m) | | 4.12 | 3.74 | 3.78 | 4.21 | 5.42 | 4.27 | 4.05 |
| LiOH content (wt%) | | 0.10 | 0.07 | 0.10 | 0.10 | 0.28 | 0.10 | 0.35 |
| Adsorption amount (mg/m$^2$) | | 23.0 | 19.3 | 22.3 | 25.0 | 29.2 | 22.9 | 33.4 |
| Slurry viscosi ty (cP) | Initial viscosity (cP) | 4,696 | 4,740 | 6,115 | 6,215 | 3,513 | 3,784 | 3,956 |
| | Viscosity after being left standing for 2 days (cP) | 7,123 | 31,052 | 8,384 | 109,000 (gelation) | 211,440 (gelation) | 195,000 (gelation) | 204,560 (gelation) |
| Viscosity change rate (%) | | 53 | 555 | 37 | 1,654 | 5,918 | 5,053 | 5,078 |

As shown in Table 1, it may be confirmed that viscosity change rates of the positive electrode active materials prepared in Examples 1 to 3 were significantly lower than those of the positive electrode active materials prepared in Comparative Examples 1 to 4.

**Experimental Example 6** - **Analysis of Electrochemical Properties of Lithium Secondary Battery**

Initial efficiency, initial resistance, and high-temperature life characteristics of lithium secondary battery half-cells prepared by using each of the positive electrode active materials prepared in Examples 4 and 5 and Comparative Example 5 were analyzed. Analysis results are presented in Table 2 below.

**<Preparation of Lithium Secondary Battery>**

Each of the positive electrode active materials prepared in Examples 4 and 5 and Comparative Example 5, a conductive agent (Carbon Black, Denka), and a PVDF binder were mixed in N-methylpyrrolidone in a weight ratio of 95:2:3 to prepare a positive electrode slurry. One surface of an aluminum current collector was coated with the positive electrode slurry, dried at 500°C, and then rolled to prepare a positive electrode.

A lithium metal electrode was used as a negative electrode.

A battery cell was prepared by preparing an electrode assembly by disposing a separator between the above-prepared positive electrode and the negative electrode, disposing the electrode assembly in a battery case, and then injecting an electrolyte solution into the case. The electrolyte solution was prepared by dissolving 0.6 M $LiPF_6$ in a mixed organic solvent, in which ethylene carbonate (EC) : dimethyl carbonate (DMC) : ethyl methyl carbonate (EMC) were mixed in a volume ratio of 1:2:1, and adding 2 wt% of vinylene carbonate (VC).

**<Analysis of Initial Efficiency, Initial Resistance, and High-temperature Life Characteristics>**

Charge and discharge were performed on the lithium secondary batteries prepared as described above.

Specifically, for initial efficiency, each lithium secondary battery was charged at 0.2 C to 4.25 V in a constant current-constant voltage (CC-CV) mode at 25°C, and then discharged at 0.2 C to 2.5 V to perform one charge and discharge cycle. The initial efficiency was derived by the following calculation.

Initial efficiency (%) = (discharge capacity during one charge and discharge cycle/charge capacity during one charge and discharge cycle) $\times$ 100

Specifically, initial resistance was calculated using a voltage change rate, when a current of 1.0 C was applied for 10 seconds after setting a state of charge (SOC) of 95% at 0.2 C during two charge and discharge cycles, based on the discharge capacity during one charge and discharge cycle which was measured at 0.2 C. Also, the initial resistance was calculated using a voltage change rate after setting an SOC of 50% during two charge and discharge cycles and using a voltage change rate after setting an SOC of 10% during two charge and discharge cycles.

Specifically, after charging of each lithium secondary battery at 0.5 C to 4.25 V in a CC-CV mode at 45°C and discharging of each lithium secondary battery at 1.0 C to 2.5 V were set as one charge and discharge cycle and 50 charge and discharge cycles were performed, capacity retention was measured to evaluate high-temperature life characteristics. The capacity retention was derived by the following calculation.

Capacity retention (%) = (discharge capacity during n charge and discharge cycles/discharge capacity during one charge and discharge cycle) $\times$ 100

[Table 2]

| | | Example 4 | Example 5 | Comparative Example 5 |
|---|---|---|---|---|
| $D_{50}$ ($\mu$m) | | 3.96 | 5.64 | 7.41 |
| Initial efficiency (%) | | 90.5 | 88.3 | 87.7 |
| Initial resistance ($\Omega$) | SoC. 95 | 1.43 | 1.59 | 1. 64 |
| | SoC.50 | 1. 41 | 1.47 | 1.53 |
| | SoC.10 | 1.69 | 1.85 | 2.01 |
| Capacity retention (%) | | 88.8 | 87.7 | 83.6 |

As shown in Table 2, it may be confirmed that the lithium secondary battery including the positive electrode active material of Comparative Example 5, in which $D_{50}$ was greater than 6.0 $\mu$m, had lower initial efficiency, higher initial resistance, and lower capacity retention than the lithium secondary batteries respectively including the positive electrode active materials of Examples 4 and 5 in which $D_{50}$ was in a range of 3.7 $\mu$m to 6.0 $\mu$m. With respect to the positive electrode active material in which the $D_{50}$ was greater than 6.0 $\mu$m, since mobility of lithium was decreased as a diffusion distance of lithium ions in the particle was increased, it is considered that the initial resistance of the lithium secondary battery including the positive electrode active material was increased. Also, since charge transfer resistance and diffusion resistance were increased, it is considered that the initial efficiency and the capacity retention were reduced.

**Claims**

1. A positive electrode active material comprising:

   a lithium nickel-based oxide containing nickel (Ni) and cobalt (Co) and having a molar ratio of the Ni to total transition metals of 80 mol% or more; and a cobalt-containing coating layer formed on a surface of the lithium nickel-based oxide,
   wherein the lithium nickel-based oxide is in a form of a single particle composed of one single nodule or a pseudo-single particle that is a composite of 30 or less nodules,
   the cobalt-containing coating layer is included in an amount of 2.0 mol% or more based on 100 moles of the lithium nickel-based oxide, and
   the positive electrode active material has a $D_{50}$ of 3.7 $\mu$m to 6.0 $\mu$m, a residual LiOH content of 0.20 wt% or less, and a Co/Ni ratio at a depth of 45 nm from a surface of the positive electrode active material of 0.15 to 0.40.

2. The positive electrode active material of claim 1, wherein the lithium nickel-based oxide has the molar ratio of the Ni to the total transition metals of 93 mol% or more.

3. The positive electrode active material of claim 1, wherein the positive electrode active material has a residual lithium content of 0.60 wt% or less.

4. The positive electrode active material of claim 1, wherein the positive electrode active material has a residual $Li_2CO_3$

content of 0.40 wt% or less.

5. The positive electrode active material of claim 1, wherein the positive electrode active material has a $D_{min}$ of 1.0 $\mu$m or more.

6. The positive electrode active material of claim 1, wherein the lithium nickel-based oxide is represented by Formula 1.

[Formula 1]    $Li_aNi_bCo_cM^1_dM^2_eO_2$

wherein, in Formula 1, $M^1$ is at least one selected from the group consisting of manganese (Mn) and aluminum (Al), $M^2$ is at least one selected from the group consisting of barium (Ba), calcium (Ca), zirconium (Zr), titanium (Ti), magnesium (Mg), tantalum (Ta), niobium (Nb), and molybdenum (Mo), and $1.0 \leq a \leq 1.5$, $0.8 \leq b \leq 1.0$, $0 \leq c \leq 0.2$, $0 \leq d \leq 0.2$, and $0 \leq e \leq 0.1$.

7. A positive electrode slurry comprising a binder and the positive electrode active material of any one of claims 1 to 6.

8. The positive electrode slurry of claim 7, wherein an adsorption amount of the binder to the positive electrode active material is 25.0 mg/m$^2$ or less.

9. The positive electrode slurry of claim 7, wherein a viscosity change rate calculated by Equation 1 at 25°C is 1,000% or less.

[Equation 1]

$$\text{Viscosity change rate (\%)} = \frac{(\text{viscosity after being left standing for 2 days}) - (\text{initial viscosity})}{\text{initial viscosity}} \times 100$$

10. A method of preparing a positive electrode active material, the method comprising:

forming a lithium nickel-based oxide by mixing a lithium nickel-based transition metal hydroxide precursor containing nickel (Ni) and cobalt (Co) with a lithium raw material and performing primary sintering; and
forming a positive electrode active material including a cobalt-containing coating layer by mixing the lithium nickel-based oxide with a cobalt-containing raw material and performing secondary sintering,
wherein the positive electrode active material comprises a lithium nickel-based oxide having a molar ratio of the Ni to total transition metals of 80 mol% or more, and a cobalt-containing coating layer formed on a surface of the lithium nickel-based oxide,
wherein the lithium nickel-based oxide is in a form of a single particle composed of one single nodule or a pseudo-single particle that is a composite of 30 or less nodules, the positive electrode active material has a $D_{50}$ of 3.7 $\mu$m to 6.0 $\mu$m and a residual LiOH content of 0.20 wt% or less, the cobalt-containing coating layer is included in an amount of 2.0 mol% or more based on 100 moles of the lithium nickel-based oxide, and
the secondary sintering is performed at 600°C to 700°C.

11. The method of claim 10, wherein the cobalt-containing raw material comprises at least one selected from the group consisting of $Co(OH)_2$, CoOOH, $Co(OCOCH_3)_2 \cdot 4H_2O$, $Co(NO_3)_2 \cdot 6H_2O$, $CoSO_4$, and $Co(SO_4)_2 \cdot 7H_2O$.

12. The method of claim 10, wherein the primary sintering is performed at 750°C to 880°C.

13. A positive electrode comprising the positive electrode active material of any one of claims 1 to 6.

14. A lithium secondary battery comprising the positive electrode of claim 13.

FIG.1

FIG.2

FIG.3

FIG.4

FIG.5

FIG.6

FIG.7

FIG.8

# EP 4 654 291 A1

## INTERNATIONAL SEARCH REPORT

International application No.

**PCT/KR2024/005937**

### A. CLASSIFICATION OF SUBJECT MATTER

**H01M 4/36**(2006.01)i; **H01M 4/525**(2010.01)i; **H01M 4/505**(2010.01)i; **H01M 4/131**(2010.01)i; **C01G 53/00**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01F 7/02(2006.01); C01G 53/00(2006.01); C30B 1/10(2006.01); H01M 10/0525(2010.01); H01M 4/131(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 고-니켈(high-nickel), 단입자(single particle), 코발트(cobalt), 코팅(coating), 소성(sintering), 전이금속(transition metal), 입경(particle size)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0063757 A (LG ENERGY SOLUTION, LTD.) 17 May 2022 (2022-05-17)<br>See claims 1 and 11; and paragraphs [0022], [0113], [0122]-[0125], [0163]-[0170], [0172], [0176], [0178], [0180], [0184] and [0220]. | 1-14 |
| A | KR 10-2020-0106043 A (UMICORE et al.) 10 September 2020 (2020-09-10)<br>See entire document. | 1-14 |
| A | KR 10-1567039 B1 (ECOPRO CO., LTD.) 10 November 2015 (2015-11-10)<br>See entire document. | 1-14 |
| A | KR 10-2018-0057864 A (UNIST(ULSAN NATIONAL INSTITUTE OF SCIENCE AND TECHNOLOGY)) 31 May 2018 (2018-05-31)<br>See entire document. | 1-14 |
| A | WO 2022-227494 A1 (SVOLT ENERGY TECHNOLOGY CO., LTD.) 03 November 2022 (2022-11-03)<br>See entire document. | 1-14 |

☐ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 August 2024** | **09 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/005937**

| Patent document cited in search report | | | Publication date (day/month/year) | Patent family member(s) | | | Publication date (day/month/year) |
|---|---|---|---|---|---|---|---|
| KR | 10-2022-0063757 | A | 17 May 2022 | CN | 116057733 | A | 02 May 2023 |
| | | | | EP | 4203100 | A1 | 28 June 2023 |
| | | | | JP | 2023-542196 | A | 05 October 2023 |
| | | | | KR | 10-2667603 | B1 | 22 May 2024 |
| | | | | US | 2023-0348294 | A1 | 02 November 2023 |
| | | | | WO | 2022-103105 | A1 | 19 May 2022 |
| KR | 10-2020-0106043 | A | 10 September 2020 | CN | 111615496 | A | 01 September 2020 |
| | | | | CN | 111615496 | B | 18 October 2022 |
| | | | | CN | 115763701 | A | 07 March 2023 |
| | | | | EP | 3728129 | A1 | 28 October 2020 |
| | | | | EP | 3728129 | B1 | 13 October 2021 |
| | | | | JP | 2021-508410 | A | 04 March 2021 |
| | | | | JP | 7052072 | B2 | 11 April 2022 |
| | | | | KR | 10-2425325 | B1 | 26 July 2022 |
| | | | | US | 11522187 | B2 | 06 December 2022 |
| | | | | US | 2021-0119204 | A1 | 22 April 2021 |
| | | | | WO | 2019-120973 | A1 | 27 June 2019 |
| KR | 10-1567039 | B1 | 10 November 2015 | KR | 10-2014-0081663 | A | 01 July 2014 |
| KR | 10-2018-0057864 | A | 31 May 2018 | KR | 10-1897365 | B1 | 10 September 2018 |
| WO | 2022-227494 | A1 | 03 November 2022 | CN | 112886006 | A | 01 June 2021 |
| | | | | CN | 112886006 | B | 06 August 2021 |
| | | | | EP | 4270544 | A1 | 01 November 2023 |
| | | | | JP | 2024-507816 | A | 21 February 2024 |
| | | | | KR | 10-2023-0074250 | A | 26 May 2023 |
| | | | | US | 2024-0150925 | A1 | 09 May 2024 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230057356